# EUROPÄISCHE PATENTANMELDUNG

(11) **EP 1 391 710 A2**
(43) Veröffentlichungstag der Anmeldung: **25.02.2004**
(21) Anmeldenummer: 03007657.4
(22) Anmeldetag: 03.04.2003
(51) Int. Cl.: G01L 9/06, G01L 9/04, G01L 9/00, G01L 1/18, G01L 1/22

(54) **Vorrichtung zur Messung einer Kraft, Vorrichtung zur Messung eines Drucks und Drucksensor**

(30) Priorität: 23.08.2002 DE 10238721
(71) Anmelder: ROBERT BOSCH GMBH, 70442 Stuttgart (DE)
(72) Erfinder: Reinhardt, Karl-Franz, 74189 Weinsberg (DE); Doering, Christian, 70563 Stuttgart (DE); Stoll, Oliver, 72762 Reutlingen (DE); Knauss, Michael, 72124 Pliezhausen (DE)

(57) **Zusammenfassung**

Es wird eine Vorrichtung (10) zur Messung einer Kraft bzw. eines Druckes in einer vorgegebenen Richtung (25) vorgeschlagen, wobei ein Substrat (20) mit einer Hauptsubstratebene (22) vorgesehen ist, und die Richtung (25) parallel zur Hauptsubstratebene (22) liegt .

## Beschreibung

### Stand der Technik

Die Erfindung geht aus von einer Vorrichtung bzw. von einem Drucksensor gemäß den Oberbegriffen der nebengeordneten Ansprüche. Es sind derzeit Drucksensoren bzw. Kraftsensoren bekannt, bei denen eine Membran, beispielsweise aus Metall oder auch beispielsweise aus Halbleitermaterial, die oberhalb eines Hohlraumes vorgesehen ist, durch eine Kraftwirkung, bzw. durch eine Druckwirkung ausgelenkt wird und wobei die Auslenkung der Membran beispielsweise mittels Dehnungsmessstreifen messbar ist. Hierbei ist es so, dass in der Regel ein Substrat vorgesehen ist, welches eine Hauptsubstratebene aufweist, wobei die zu messende Kraft in einer Richtung auf das Substrat einwirkt, die senkrecht zur Hauptsubstratebene vorgesehen ist.

### Vorteile der Erfindung

Die erfindungsgemäße Vorrichtung und der erfindungsgemäße Drucksensor gemäß der neben geordneten Ansprüche, haben dem gegenüber den Vorteil, dass ein Substrat vorgesehen ist, welches eine Hauptsubstratebene aufweist, wobei die vorgegebene Richtung der Kraftmessung parallel zur Hauptsubstratebene vorgesehen ist. Dadurch ist es möglich, zum einen das Sensorelement der erfindungsgemäßen Vorrichtung kleiner zu gestalten und damit insgesamt die erfindungsgemäße Vorrichtung kleiner zu gestalten. Weiterhin ist es dadurch möglich, eine thermische Entkopplung bzw. eine thermische Stressreduktion des Sensorelements gegenüber dem Ort der Messung zu erreichen.

Die Möglichkeit zur Bestimmung des Brennraumdruckes im normalen Fahrbetrieb eröffnet neue Möglichkeiten des Motormanagements. Von Motormanagementsystemen auf Basis des Brennraumdruckes werden vielfältige Nutzeffekte erwartet, beispielsweise die Reduzierung von Emissionen und Geräuschpegel, insbesondere beim Dieselmotor. Zudem ist eine Online-Diagnose des Motors auch zur Erkennung und Vermeidung von Motorfehlern wünschenswert. Aufgrund der extremen Bedingungen im Brennraum kommen herkömmliche, in Serie produzierte (Hoch-) Drucksensoren an ihre physikalischen Grenzen. Im Brennraum herrschen Temperaturen von über 1000 °C, welche durch eine thermische Ankopplung an die Zylinderwand auf unter 350 °C an der Sensorspitze reduziert werden können. Aufgrund der räumlichen Enge am Zylinderkopf moderner 4-Ventil-Motoren ist auch die Baugröße des Sensors stark limitiert. So soll der Kopf des Sensors bereits beim 2-Ventil-Motor einen Durchmesser von maximal 4 mm über eine Baulänge von mindestens 20 mm aufweisen. Bei einem 4-Ventil-Motor sind bis zu 100 mm Länge und mehr in der Diskussion. Die Baulänge sollte daher aufgrund der geforderten Variantenvielfalt beliebig zu wählen sein. Der zu detektierende Druckbereich liegt im Fall eines Dieselmotors bei maximal 200 bar + ca. 100 bar Sicherheitsreserve für den Berstdruck. Weiter wirken am Zylinderkopf Querbeschleunigungen bis 30 g. Aus Zuverlässigkeitsgründen wir gefordert, dass der Sensor bis zu 30 000 Temperaturwechsel von - 40°C bis 300°C ohne Degradation oder gar Ausfall übersteht. Zur optimalen Nutzung des Potentials eines solchen Sensors wird zudem eine dynamische Auflösung bis 20 kHz gefordert.

Bei Temperaturen bis 350°C ist der Einsatz möglicher elektronischer Wandlerprinzipien (piezoelektrisch, piezoresistiv usw.) stark eingeschränkt. Insbesondere die konventionelle Elektronik auf Siliziumbasis kann nicht mehr eingesetzt werden, da diese nur bis maximal 150°C sinnvoll arbeitet. Die Verwendung von Polysilizium-Dehnmessstreifen oder herkömmlichen, in Silizium diffundierten Piezowiderständen ist daher nicht möglich. Die Größenbeschränkung und die erzielbaren vergleichsweise geringen Signale verhindern den Einsatz von Metall-Dünnschicht-Sensorelementen. Weiterhin ist es in der Praxis nicht möglich, einen Brennraumdrucksensor derart vorzusehen, dass ein Stempel vorgesehen ist, der den Hub einer Membran im oder am Brennraum auf einen mikromechanischen Drucksensor im kühleren Bereich überträgt und so die mechanisch-elektrische Signalwandlung aus dem heißen Bereich am Rand des Brennraums in den kühleren Bereich heraus verlegt, weil aufgrund der notwendigen Dynamik von 20 kHz grundsätzlich mit einer Limitierung der Stempellänge und damit der gesamten Geometrie zu rechnen ist. Konkret bedeutet dies beispielsweise, dass sich die geforderte Geometrie mit einem Durchmesser von < 4 mm über mehr als 25 mm Baulänge nicht realisieren lässt, da bereits bei etwa 5 kHz Biegeschwingungen in einem solchen Stempel und im Gehäuse auftreten. Die erfindungsgemäße Vorrichtung zur Messung einer Kraft und zur Messung eines Drucks bzw. der Drucksensor haben daher den Vorteil, eine elektronische Lösung für das Problem der Brennraumdrucksensorik bereitzustellen, wobei die erfindungsgemäße Vorrichtung auf kleinstem Raum bereitgestellt werden kann. Durch eine Signalwandlung direkt an bzw. relativ nahe an der Brennraummembran soll die geometrische Beschränkung bei Verwendung eines Koppelgliedes umgangen werden, wodurch die geforderte Variantenvielfalt ermöglicht wird.

Durch die Verwendung von SOI-Material (Silicon on Insulator) wird die Forderung einer Temperaturbeständigkeit bis über 350°C hinaus erfüllt. Dies hat den Vorteil, dass das Sensorelement vergleichsweise nahe an die Zone des zu messenden Drucks herangeführt werden kann, so dass die Vorrichtung mit weniger Fehlern durch die Übertragung des Druckes von dem Brennraum auf das Sensorelement behaftet ist. Durch die Verwendung von Silicon Carbide on Insulator als Substratmaterial bzw. als Material des Sensorelementes ist es sogar möglich, das Sensorelement bis zu Temperaturen von ca. 500°C thermisch zu belasten.

Weiterhin ist von Vorteil, dass das Substrat des erfindungsgemäßen Sensorelements stehend in Bezug auf die Messfläche eingebaut wird. Stehend bedeutet in diesem Fall, dass die Richtung der zu messenden Kraft bzw. die Richtung der Kraft, die einem zu messenden Druck entspricht, parallel zu der Hauptsubstratebene des Substrats wirkt. Hierdurch ist es vorteilhaft möglich, die benötigte Einbaufläche zu minimieren, wobei gleichzeitig eine Kontaktierungsmöglichkeit von hinten, d.h. eine Kontaktierungsmöglichkeit auf der dem Brennraum gegenüber liegenden Seite der Membran möglich ist. Beim vorliegenden erfindungsgemäßen Aufbau wird der SOI-Chip an einer definierten Stelle komplett durchtrennt, und zwar über die gesamte Wafer-Dicke. Dadurch entsteht beim stehenden Aufbau und bei zur Hauptsubstratebene paralleler Kraftankopplung ein Biegebalken.

Erfindungsgemäß ist es vorteilhaft möglich, den Biegebalken als mikromechanischen Biegebalken in SOI-Material für maximale Signalausbeute vorzusehen. Erfindungsgemäß ist es vorteilhaft möglich, in dem Biegebalken Dehnwiderstände vorzusehen.

Weiterhin ist es vorteilhaft möglich, zur definierten Kraftankopplung eine "Nase" bzw. verschiedene Variationen hiervon vorzusehen. Hierdurch ist es möglich, eine erfindungsgemäße Vorrichtung mit minimaler Auflagefläche des Silizium-Chips auf der Membran und damit minimaler Temperaturübertragung zwischen der Membran und dem Chip vorzusehen. Vorteilhaft ist hier auch, dass der brennraumseitig aufliegende Substratteil einen vergleichsweise hohen Wärmewiderstand durch die Substrateinengung (Nase) und den verringerten Kontaktbereich aufweist, so dass das Sensorelement effektiv gegen eine zu hohe Temperaturbelastung von Seiten des Brennraumes her geschützt ist.

Weiterhin ist es, insbesondere durch die Anordnung des Sensorelementes, möglich, bei Bedarf auf dem SOI-Sensorchip eine hochtemperaturstabile Auswerteelektronik für die primaären Sensorsignale mit zu integrieren.

Vorteilhaft bei der erfindungsgemäßen Vorrichtung und dem erfindungsgemäßen Drucksensor ist es weiterhin, dass diese unter Verwendung von mikromechanischen Standardprozessen herstellbar sind, was die Vorrichtung verbilligt und robuster - insbesondere auch gegenüber Herstellungstoleranzen - macht.

Weiterhin ist es vorteilhaft, die erfindungsgemäße Vorrichtung derart vorzusehen, dass auf dem bzw. in dem SOI-Chip monokristallines Silizium zur piezoresistiven Signalwandlung vorgesehen ist. Hierdurch können ein hoher K-Faktor und -zusammen mit der im Vergleich zu Kraftbeanspruchung eines Chips ohne Substrataussparung - empfindlicheren Biegebalkenanordnung - hohe primäre Messsignale realisiert werden. Dadurch ist es erfindungsgemäß vorteilhaft möglich, eine Signalführung der primären messignale über große Distanzen zu realisieren, - eine Verstäkung vor Ort ist daher nicht zwingend. Vorteilhaft ist dies insbesondere bezüglich der Variantenvielfalt bei langen, schlanken Sensoraufbauten, die Signalführung über weiter Strecken erfordern.

Vorteilhaft ist bei der erfindungsgemäßen Vorrichtung weiterhin, dass geringe Substratmassen bzw. geringe Sensorelementmassen Verwendung finden, was insbesondere durch die Anwendung von Mikromechanik ermöglicht wird und so zu hohen Eigenresonanzfrequenzen von wesentlich größer als 100 kHz führt.

### Zeichnung

Ausführungsbeispiele der Erfindung sind in der Zeichnung dargestellt und in der nachfolgenden Beschreibung näher erläutert.

Es zeigen:
Figur 1: Den grundsätzlichen Aufbau der erfindungsgemäßen Vorrichtung bzw. des erfindungsgemäßen Drucksensors,
Figur 2: eine erste Ausführungsform der erfindungsgemäßen Vorrichtung,
Figur 3: eine zweite Ausführungsform der erfindungsgemäßen Vorrichtung.
Figur 4: eine dritte Ausführungsform der erfindungsgemäßen Vorrichtung,
Figur 5: eine vierte Ausführungsform der erfindungsgemäßen Vorrichtung und
Figur 6: ein Aufbauprinzip der erfindungsgemäßen Vorrichtung in einem Sensor.

### Beschreibung der Ausführungsbeispiele:

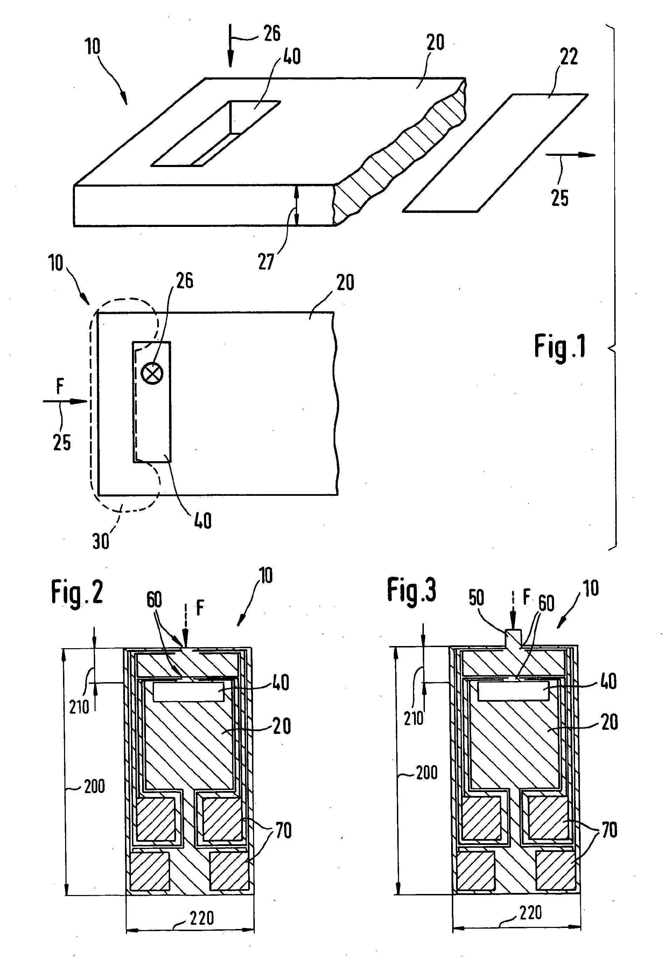

In Figur 1 ist im oberen Teil der Figur die erfindungsgemäße Vorrichtung zur Messung einer Kraft bzw. zur Messung eines Druckes dargestellt und mit dem Bezugszeichen 10 versehen. Im unteren Teil der Figur 1 ist die Vorrichtung 10 ebenfalls dargestellt, jedoch in Draufsicht, wobei sie im oberen Teil der Figur 1 in perspektivischer Darstellung dargestellt ist. Die erfindungsgemäße Vorrichtung 10 umfasst ein Substrat 20, welches eine Hauptsubstratebene 22 aufweist. Das Substrat 20 weist eine Dicke 27 auf, wobei die Dicke 27 nicht gleichmäßig über die gesamte Substratoberfläche vorgesehen sein muss. Die erfindungsgemäße Vorrichtung 10 dient zur Messung einer Kraft, bzw. zur Messung eines Druckes, wobei eine Messfläche vorgesehen ist, über die die Messung eines Druckes auf eine Messung einer Kraft überführt werden kann, wobei die Kraft in einer vorgegebenen Richtung in das Sensorelement 10 eingeleitet wird, wobei die Kraft in Figur 1 mit dem Bezugszeichen F versehen ist und wobei die vorgegebene Richtung der Krafteinleitung in das Sensorelement 10 in Figur 1 mit dem Bezugszeichen 25 versehen ist. Die erfindungsgemäße Vorrichtung unterscheidet sich von bekannten Vorrichtung zur Messung einer Kraft bzw. zur Messung eines Druckes insbesondere dadurch, dass die vorgegebene Richtung 25 zur Einleitung der Kraft F parallel zur Hauptsubstratebene 25 vorgesehen ist. Hierzu ist das Sensorelement 10 derart vorgesehen, dass in seinem Substrat 20 eine, im unteren Teil der Figur 1 mit dem Bezugszeichen 30 versehene Spannungszone vorgesehen ist und eine, im unteren und oberen Teil der Figur 1 mit dem Bezugszeichen 40 versehene, Abschwächungszone vorgesehen ist. Die Spannungszone 30 und die Abschwächungszone 40 wirken derart zusammen, dass beim Einleiten der Kraft F in Richtung 25 in das Substrat 20 in der Spannungszone 30 eine mechanische Spannung eingeführt wird, die die Spannungszone 30 in der Regel mechanisch leicht verbiegt. Diese Verbiegung kann mit Hilfe von, in den weiteren Figuren dargestellten, Verbiegungsmessmitteln, beispielsweise Piezowiderständen gemessen werden. Damit sich die Spannungszone 30 verbiegen kann, ist es notwendig, dass die Abschwächungszone 40 vorhanden ist, das heißt, dass das Substrat 20 im Bereich der Abschwächungszone in der Richtung 25 weniger widerstandsfähig ist, als in übrigen Bereichen. Diese Abschwächung der Festigkeit des Sensorelements in der Abschwächungszone 40 wird erfindungsgemäß insbesondere dadurch erreicht, dass die Abschwächungszone 40 eine Ausnehmung aufweist, wobei die Ausnehmung insbesondere als Durchbruch durch die gesamte Dicke 27 des Substrats 20 vorgesehen ist. Diese Ausnehmung bzw. dieses Loch ist damit in einer Richtung 26 senkrecht zur Hauptsubstratebene 22 vorgesehen. Wie insbesondere aus dem unteren Teil der Figur 1 hervorgeht, ist die Spannungszone 30, welche in Figur 1 im unteren Bereich mit einer gestrichelten Linie ungefähr umgrenzt ist, in der Hauptsubstratebene 22, benachbart zu der Abschwächungszone 40, vorgesehen. Erfindungsgemäß ist es insbesondere vorgesehen, dass die Spannungszone 30 am Rand des Substrats 20 vorgesehen ist und sich die Abschwächungszone 40 zum Inneren des Substrates 20 hin, ausgehend von der Spannungszone 30, befindet. Erfindungsgemäß ist die Abschwächungszone 40, insbesondere als im Wesentlichen rechteckförmige Ausnehmung und insbesondere als rechteckförmiges Loch, d.h. als Durchbruch durch die gesamte Dicke 27 des Substrates 20, vorgesehen.

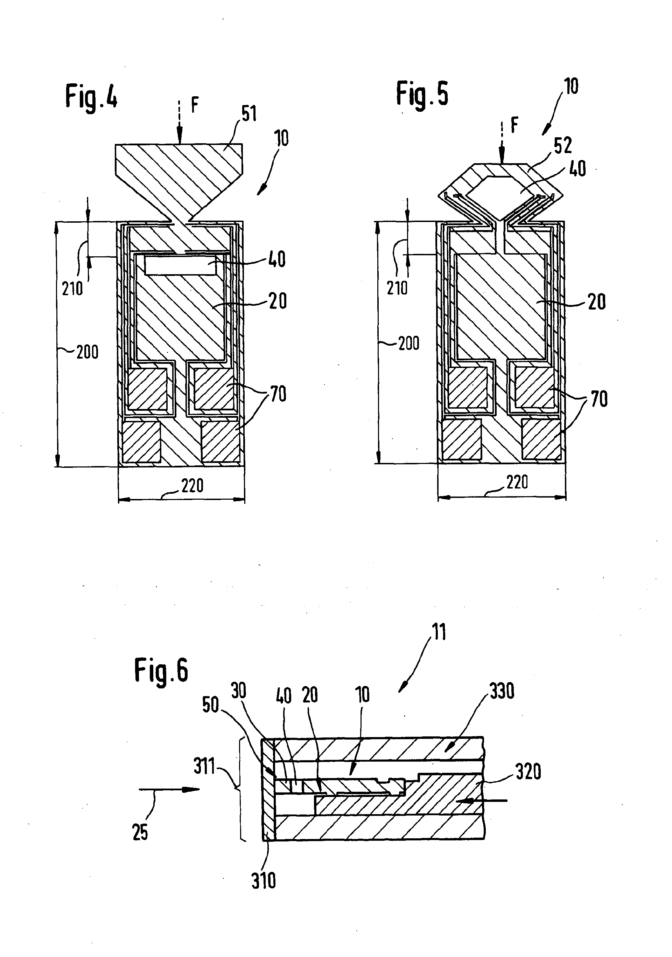

In Figur 6 ist ein erfindungsgemäßer Drucksensor 11 mit einer erfindungsgemäßen Vorrichtung 10 dargestellt. Der Drucksensor 11 weist außer dem Substrat 20, der Abschwächungszone 40 und der Spannungszone 30 noch einen Träger 320 des Sensorelements auf. Weiterhin weist der erfindungsgemäße Drucksensor 11 ein Gehäuse 330 und eine Membran 310 auf. Das Gehäuse 330 ist insbesondere als längliches Rohr vorgesehen, in welches das auf dem Träger 320 befestigte Sensorelement bzw. das Substrat 20 eingeschoben wird. Die Membran 310 ist mit dem Gehäuse 330 verbunden, beispielsweise durch Schweißung, Klebung oder ähnliche Fügetechniken. Alternativ dazu kann die Membran 310 auch einstückig mit dem Gehäuse 330 verbunden sein. In einer Anwendung des Drucksensors 11 als Brennraumdrucksensor für eine Verbrennungskraftmaschine ist es vorgesehen, dass die Membran 310 an den Brennraum der Verbrennungskraftmaschine angrenzt und so die Druckverhältnisse im Brennraum, der in Figur 6 nicht dargestellt ist, auf das Sensorelement bzw. das Substrat 20 überträgt. Hierbei ist es vorgesehen, dass die Membran 310 eine Messfläche 311 aufweist, so dass der im Brennraum herrschende Druck eine Kraftwirkung auf die Messfläche 311 in einer Richtung ausübt, die im Wesentlichen senkrecht zur Membranoberfläche 310 vorgegeben ist. Diese Richtung der Kraftwirkung entspricht der im Zusammenhang mit Figur 1 behandelten, vorgegebenen Richtung 25. Die Kraftwirkung auf die Membran 310 wird erfindungsgemäß an das Sensorelement bzw. das Substrat 20 übertragen, so dass der Spannungszustand in der Spannungszone 30 als Maß für die im Brennraum herrschenden Druckverhältnisse zugänglich ist. Zur Übertragung der Kraftwirkung von der Membran 310 auf das Sensorelement ist es erfindungsgemäß insbesondere vorgesehen und in Figur 6 dargestellt, dass ein Krafteinleitungselement 50 zwischen der Membran 310 und dem Sensorelement vorgesehen ist. Zum Einbau der Vorrichtung 10 auf dem Träger 320 in das Gehäuse 330 wird die Vorrichtung 10 insbesondere in das Gehäuse 330 eingeführt und vorzugsweise unter geringer Vorspannung - beispielsweise etwa 15 N - auf die Membran 310 aufgebracht, die auf dem Gehäuse 330 sitzt und den Sensor bzw. die Vorrichtung 10 gegen den Brennraum abdichtet. Die Vorspannung ist erfindungsgemäß insbesondere nötig, um auch bei tiefen Temperaturen den erforderlichen Kraftschluss zwischen Membran 310 und Sensor bzw. der Vorrichtung 10 zu gewährleisten. Durch die Veränderung des Brennraumdruckes verformt sich die Membran, wodurch über ein Krafteinleitungselement 50 eine Verbiegung der Spannungszone 30, welche auch als Mikrobiegebalken 30 bezeichnet wird, erfolgt und damit ein elektrisches Signal erzeugt wird. Erfindungsgemäß ist es insbesondere vorteilhaft, dass das Krafteinleitungselement 50 derart vorgesehen ist, dass die Auflagefläche bzw. die Verbindungsfläche zwischen der Membran 310 und dem Krafteinleitungselement 50 vergleichsweise besonders klein ist. Hierdurch ist es möglich, dass selbst bei einer heißen Membran 310, welche beispielsweise Temperaturen von über 300°C aufweist, wesentlich geringere Temperaturen am Sensorelement - insbesondere Temperaturen unterhalb von 230°C - erreichbar sind. Auf diese Art ist es möglich, in sicherer Art und Weise einen SOI-Chip bzw. ein SOI-Substrat als Material des Substrats 20 als Brennraumdrucksensor 11 zu verwenden.

Durch die Verwendung von SOI als Material des Substrats 20 kann die Funktionalität einer elektronischen Struktur bis zu Temperaturen oberhalb von 350°C gewährleistet werden. Die mechanisch-elektrische Signalwandlung kann damit direkt an der Brennraummembran 310, welche Temperaturen von 300°C und darüber aufweist, erfolgen. Auf eine Kraftkoppelung über weite Strecken zwischen der heißen Sensormembran 310 und dem Ort der mechanisch-elektrischen Signalwandlung, beispielsweise mittels eines Stempels, kann damit erfindungsgemäß verzichtet werden. Bei einem SOI-Substrat wird beispielsweise monokristallines Silizium zur piezoresistiven Signalwandlung der mechanischen Spannungen in der Spannungszone 30 verwendet, wodurch große Signalstärken entstehen. Dies ist erfindungsgemäß deswegen vorteilhaft, weil das monokristalline Silizium als piezoresistive Schicht einen K-Faktor bis zu 120 aufweist. Hierdurch ist es möglich, zu hohen Empfindlichkeiten von bis zu 1,62 mV pro Volt und bar zu gelangen. Bei diesem Wert erhielte man bei 200 bar entsprechend ein Signal von 324 mV pro Volt. Dies hat den Vorteil, dass eine Signalverstärkung auf dem Sensorelement bzw. auf dem Substrat 20 des Sensorelements, selbst nicht erforderlich ist, wenngleich die Möglichkeit zur Integration elektronischer Funktionen bei einem SOI-Substrat prinzipiell gegeben ist. Weiterhin ist es erfindungsgemäß möglich, zusätzliche Funktionen wie beispielsweise die Datenauswertung auf dem SOI-Substrat 20 durchzuführen. Alternativ dazu und insbesondere, wenn zusätzliche Funktionen nicht auf dem Substrat 20 integriert sind, ist es durch die genannten, großen Signale möglich, dass Leitungen, die das Signal übertragen, bis zur Auswerteeinheit entsprechend lang gehalten werden können. Dies gewährleistet die Möglichkeit einer großen Variantenvielfalt bei den verschiedenen Aufbauformen eines erfindungsgemäßen Drucksensors 11.

In den Figuren 2 bis 5 sind verschiedene mikromechanische Realisierungen der erfindungsgemäßen Vorrichtung 10 dargestellt. Hierbei ist jeweils die Richtung der Krafteinleitung mittels eines Pfeils und der Bezeichnung "F" dargestellt. Weiterhin ist jeweils das Substrat 20 mit seiner Abschwächungszone 40 dargestellt. Auf dem Substrat 20 sind an den Stellen der größten Spannung in der Spannungszone 30, die jedoch in den Figuren 2 bis 5 nicht explizit mit einem Bezugszeichen erwähnt wird, Piezowiderstände 60 vorgesehen. Die Piezowiderstände 60 sind erfindungsgemäß insbesondere als monokristalline Silizium-Bereiche im SOI-Material des Substrates 20 vorgesehen, können jedoch erfindungsgemäß auch mittels eines anderen piezoaktiven Materials ausgestaltet sein. In den Figuren 4 und 5 sind die piezoresistiven Elemente nicht mehr explizit dargestellt. Weiterhin ist den genannten Figuren 2-5 jeweils anhand von jeweils 2 Beispielen Kontaktierungsstellen mit den Bezugszeichen 70 versehen. Die Kontaktierungsstellen 70 sind mit Leitungen mit einem vergleichsweise geringen ohmschen Widerstand, beispielsweise Metallleitungen, mit den piezoresistiven Elementen 60 verbunden. Die Kontaktstellen 70 dienen dem Abgriff der durch die piezoresistiven Bereiche 60 verursachten elektrischen Signale. Beispielhaft ist in Figur 2 bis 5 die Breite 220 der Vorrichtung 10, die Länge 200 der Vorrichtung 10 und die Ausdehnung 210 eines Teils der Spannungszone dargestellt. Beispielhaft sind als Maße für die Breite 220 der Vorrichtung 1,6 mm, für die Länge 200 der Vorrichtung 3 mm und für die Ausdehnung 210 der Spannungszone 0,43 mm vorgesehen. Diese Werte sind jedoch erfindungsgemäß lediglich beispielhaft zu verstehen. Weiterhin ist in den Figuren 3 bis 5 eine Krafteinleitungszone bzw. ein Krafteinleitungselement mit den Bezugszeichen 50, 51, 52 dargestellt. Diese entsprechen verschiedenen mikromechanischen Realisierungen der erfindungsgemäßen Vorrichtung 10. Alle Varianten basieren auf dem Ansatz, einen Mikrobiegebalken, der hier auch als Spannungszone 30 bezeichnet wird, mit integrierten Silizium-Piezowiderständen herzustellen, die bei Verbiegung bzw. bei mechanischen Spannungen des Mikrobiegebalkens 30, ihren elektrischen Widerstand verändern. Dabei sind die Widerstände 60 immer dort anzubringen, wo bei Verbiegung der Mikrostruktur die größten mechanischen Verformungen zu erwarten sind. Es zeigt sich, dass sich die Balkenmitte der Spannungszone 30 hierfür sehr gut eignet. Weiter sind die Widerstände 60 erfindungsgemäß insbesondere zu einer Wheatstone-Brücke verschaltet, wodurch Temperatur und Drifteffekte kompensiert werden können. Die einfachste erfindungsgemäße Lösung ist als erste Ausführungsform der erfindungsgemäßen Vorrichtung 10 in Figur 2 dargestellt, wo die Membran 310 so geformt sein muss, dass sie den Balken bzw. die Spannungszone 30 in definierter Art und Weise belastet. Bei der zweiten, in Figur 3 dargestellten Ausführungsform der erfindungsgemäßen Vorrichtung 10 ist diese definierte Krafteinleitung bereits durch ein Krafteinleitungselement 50 integriert. Das Krafteinleitungselement 50 ist in Figur 3 insbesondere als "Nase" dargestellt und führt zur Verbiegung des mikromechanisch dargestellten Balkens, bzw. der Spannungszone 30, und damit zur Verstimmung der abgeglichen Wheatstone-Brücke. Die ungefähren Maße der erfindungsgemäßen Vorrichtung sind beispielhaft mit 2 auf 3 mm sehr klein möglich. Erfindungsgemäß besteht jedoch die Möglichkeit, eine noch kleinere Vorrichtung 10 vorzusehen. Eine dritte Ausführungsform der erfindungsgemäßen Vorrichtung 10 ist in Figur 4 dargestellt und umfasst ein modifiziertes Krafteinleitungselement 51. Das Krafteinleitungselement 51 in der dritten Ausführungsform der Vorrichtung 10 kann im Wesentlichen als ein Dreieck beschrieben werden, dessen Spitze auf eine definierte Stelle der Spannungszone 30 weist und dessen Basis in Kontakt zur Membran 310 steht. Hierbei ist es so, dass die 3. Ausführungsform der erfindungsgemäßen Vorrichtung 10 das Krafteinleitungselement 51 mit einer "abgeschnittenen" Spitze des Dreiecks und einer Verlängerung der Basis des Dreiecks in Richtung der Membran 310 vorsieht. Das Krafteinleitungselement 51 kann alternativ auch als Keil beschreiben werden, dessen Spitze auf die Spannungszone 30 weist. Die Krafteinleitungselemente 50, 51 sind insbesondere in Form einer Verjüngung des Substrates 20 vorgesehen, so dass die Krafteinleitung besser definierbar und lokalisierbar ist. Darüberhinaus ist es durch eine solche Substratverjüngung vorteilhaft möglich, den Substratbereich, in welchem sich die Piezowiderstände oder allgemein die Messelemente befinden, thermisch besser vom Bereich der Membran 310 abzukoppeln, weil die Wärmeleitung über den verjüngten Bereich des Krafteinleitungselements 50, 51 kleiner ist. In einer in Figur 5 dargestellten vierten Ausführungsform der erfindungsgemäßen Vorrichtung 10 wird statt eines Biegebalkens als Spannungszone 30 eine blattfederartige Struktur 52 verwendet, in welche die Piezowiderstände integriert sind. Die blattfederartige Struktur 52 umfasst im wesentlichen vier Schenkel und kann auch als rautenförmige Struktur bezeichnet werden, deren eine "Ecke" mit dem Substrat einstückig verbunden ist, deren dieser einen Ecke gegenüberliegende Ecke der Raute als Krafteinleitungselement dient und deren andere beiden Ecken die Bereiche aufweisen, die die Piezowiderstände aufnehmen. Die als Krafteinleitungselement dienende Ecke ist erfindungsgemäß insbesondere abgeflacht vorgesehen. Im Inneren der Raute ist die Ausnehmung 40 vorgesehen, so dass die blattfederartige Struktur 52 den Spannungsbereich 30, die Ausnehmung 40 und das Krafteinleitungselement umfasst.

Zur Kontaktierung der Wheatstone-Brücke sind metallische Kontaktpads 70 in den Figuren 2 bis 5 vorgesehen. Im Falle einer auf dem Substrat 20 integrierten, jedoch in den Figuren nicht dargestellen Auswerteschaltung dienen die Kontaktpads 70 zum Abgriff des vollständig verstärkten N-Signals. Das Substrat 20 wird von dem Träger 320 gehaltern . Die Fixierung kann dabei auf Anschlag mit geeigneter Klammerung oder durch eine Verbindungstechnik wie z.B. Aufglasen erfolgen. Die elektrische verbindung zu den Kontakpads kann z.B. durch Wire-Bonding, durch Thermokompressionsbonding oder mittels Schweißen erfolgen.

Die Bondpads und die Verbindungsleitungen der Bondpads 70 zu den piezoresistiven Widerständen 60 sind erfindungsgemäß insbesondere als metallisierte Bereiche vorgesehen.

Als maximale Verbiegung der Spannungszone 30 ist erfindungsgemäß insbesondere eine Durchbiegung in der Mitte von etwa 3,7 um vorgesehen. Die Spannungen in der Balkenmitte sind auf der Krafteinleitungsseite und der Aussparungsseite in den Figuren 2 bis 4 etwa gleich groß und entgegengesetzt gerichtet. Die Balkenmitte eignet sich daher für die Platzierung der piezoresistiven Widerstände 60.

## Patentansprüche

1. Vorrichtung (10) zur Messung einer Kraft in einer vorgegebenen Richtung (25) mit einem Sensorelement, wobei das Sensorelement ein Substrat (20) mit einer Hauptsubstratebene (22) aufweist, **dadurch gekennzeichnet, dass** die vorgegebene Richtung (25) der Kraftmessung parallel zur Hauptsubstratebene (22) vorgesehen ist.

2. Vorrichtung (10) nach Anspruch 1, **dadurch gekennzeichnet, dass** das Sensorelement eine Ausnehmung (40) im Substrat (20) in einer Richtung (26) senkrecht zur Hauptsubstratebene (22) vorsieht.

3. Vorrichtung (10) zur Messung einer Kraft mit einem Sensorelement, wobei das Sensorelement ein Substrat (20) umfasst, wobei das Substrat (20) eine Hauptsubstratebene (22) aufweist, **dadurch gekennzeichnet, dass** das Sensorelement eine Spannungszone (30) und eine Abschwächungszone (40) aufweist, wobei die Spannungszone (30) im Wesentlichen über die gesamte Dicke (27) des Substrats (20) senkrecht zur Hauptsubstratebene (22) vorgesehen ist und wobei die Abschwächungszone (40) ebenfalls im Wesentlichen über die gesamte Dicke (27) des Substrats (20) senkrecht zur Hauptsubstratebene (22) vorgesehen ist.

4. Vorrichtung (10) nach Anspruch 3, **dadurch gekennzeichnet, dass** die Spannungszone (30) und die Abschwächungszone (40) in der Hauptsubstratebene (22) benachbart vorgesehen sind.

5. Vorrichtung (10) nach Anspruch 3 oder 4, **dadurch gekennzeichnet, dass** die Abschwächungszone (40) als eine Ausnehmung (40) im Substrat in einer Richtung (26) senkrecht zur Hauptsubstratebene (22) vorgesehen ist.

6. Vorrichtung (10) nach einem der vorhergehenden Ansprüche, **dadurch gekennzeichnet, dass** die Ausnehmung (40) als Ausnehmung (40) durch die gesamte Dicke (27) des Substrats (20) senkrecht zur Hauptsubstratebene (22) vorgesehen ist.

7. Vorrichtung (10) nach einem der vorhergehenden Ansprüche, **dadurch gekennzeichnet, dass** die Ausnehmung (40) als ein Loch durch das Substrat (20) in der Richtung (26) senkrecht zur Hauptsubstratebene (22) vorgesehen ist.

8. Vorrichtung (10) nach einem der vorhergehenden Ansprüche, **dadurch gekennzeichnet, dass** die Ausnehmung (40) im Wesentlichen als Rechteck vorgesehen ist.

9. Vorrichtung (10) nach einem der vorhergehenden Ansprüche, **dadurch gekennzeichnet, dass** die Spannungszone (30) am Rand des Substrats (20) vorgesehen ist.

10. Vorrichtung (10) nach einem der vorhergehenden Ansprüche, **dadurch gekennzeichnet, dass** an der Spannungszone (30) ein Krafteinleitungselement (50, 51, 52) einstückig mit dem Substrat (20) verbunden ist.

11. Vorrichtung (10) nach Anspruch 10, **dadurch gekennzeichnet, dass** das Krafteinleitungselement (50, 51, 52) als Verjüngung (50) oder als Keil (51) bzw. Dreieck (51) vorgesehen ist oder dass eine blattfederartige Struktur (52) vorgesehen ist, die die Spannungszone (30), die Ausnehmung (40) und das Krafteinleitungselement umfasst.

12. Vorrichtung (10) nach einem der vorhergehenden Ansprüche, **dadurch gekennzeichnet, dass** das Krafteinleitungselement (50, 51, 52) in der Mitte der Spannungszone (30) vorgesehen ist.

13. Vorrichtung (10) nach einem der vorhergehenden Ansprüche, **dadurch gekennzeichnet, dass** das Substrat (20) aus einem Halbleitermaterial vorgesehen ist.

14. Vorrichtung (10) nach einem der vorhergehenden Ansprüche, **dadurch gekennzeichnet, dass** das Substrat (20) wenigstens in einem Teilbereich als Silicon on Insulator-Material bzw. als Silicon Carbide on Insulator-Material vorgesehen ist.

15. Vorrichtung (10) nach einem der vorgehenden Ansprüche, **dadurch gekennzeichnet, dass** das Sensorelement als ein mikromechanisches Sensorelement vorgesehen ist und/oder auf dem Substrat (20) eine integrierte Auswerteelektronik vorgesehen ist.

16. Vorrichtung (10) zur Messung eines Drucks mit einer Vorrichtung zur Messung einer Kraft nach einem der Ansprüche 1-15, wobei eine Messfläche (311) vorgesehen ist und wobei der zu messende Druck über die Messung der Druckkraft auf die Messfläche (311) gemessen wird.

17. Drucksensor (11), insbesondere zur Messung des Drucks im Brennraum einer Verbrennungskraftmaschine, **dadurch gekennzeichnet, dass** der Drucksensor (11) eine Vorrichtung (10) nach einem der vorhergehenden Ansprüche aufweist.
